(19) Europäisches Patentamt
European Patent Office
Office européen des brevets

(11) **EP 2 193 867 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.12.2022 Patentblatt 2022/51**

(45) Hinweis auf die Patenterteilung:
**20.06.2012 Patentblatt 2012/25**

(21) Anmeldenummer: **08170563.4**

(22) Anmeldetag: **03.12.2008**

(51) Internationale Patentklassifikation (IPC):
***B23H 7/08*** (2006.01)

(52) Gemeinsame Patentklassifikation (CPC):
**B23H 7/08**

(54) **Verfahren zur Herstellung einer Drahtelektrode zum funkenerosiven Schneiden.**

Method for manufacturing a wire electrode for electrical discharge cutting.

Méthode de fabrication d'une électrode en fil d'acier destinée à la coupe par étincelage.

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**09.06.2010 Patentblatt 2010/23**

(73) Patentinhaber: **Berkenhoff GmbH**
**35452 Heuchelheim (DE)**

(72) Erfinder:
• **Baumann, Ingo**
**35753 Greifenstein (DE)**

• **Nöthe, Tobias**
**35745 Herborn (DE)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
EP-A- 0 733 431    EP-A- 1 295 664
EP-A- 1 949 995    FR-A- 2 881 974
US-A- 4 935 594    US-A- 4 977 303
US-A- 5 808 262    US-A1- 2006 219 666

EP 2 193 867 B2

**Beschreibung**

Die vorliegende Erfindung betrifft ein Verfahren zum Herstellen einer Drahtelektrode zum funkenerosiven Schneiden mit einem Kern, der ein Metall oder eine Metalllegierung aufweist, und einem den Kern umgebenden Mantel, der eine oder mehrere Mantelschichten umfasst, von denen mindestens eine ein Phasengemisch aus $\beta$- und/oder $\beta$'-Messing und $\gamma$-Messing aufweist.

Eine derartige Drahtelektrode ist aus US5808262 bekannt. Ein deratiges Verfahren ist aus EP 0733431 bekannt.

Funkenerosionsverfahren (electrical discharge machining, EDM) werden zum Trennen elektrisch leitender Werkstücke eingesetzt und beruhen auf der Abtragung von Werkstoff mit Hilfe von Funkenentladungen zwischen dem Werkstück und einem Werkzeug. Zu diesem Zweck werden zwischen dem betreffenden Werkstück und dem in einem geringen Abstand dazu angeordneten und als Elektrode fungierenden Werkzeug in einer dielektrischen Flüssigkeit, wie zum Beispiel deionisiertem Wasser oder einem Öl, durch das Anlegen von Spannungsimpulsen kontrollierte Funkenentladungen herbeigeführt. Auf diese Weise können Werkstücke, die beispielsweise aus Metallen, elektrisch leitfähigen Keramiken bzw. Verbundwerkstoffen usw. bestehen, im wesentlichen unabhängig von ihrer Härte bearbeitet werden.

Ein spezielles Funkenerosionsverfahren, bei dem das Werkzeug durch einen gespannten, dünnen Draht mit typischen Durchmessern in einem Bereich von etwa 0,02 bis 0,4 mm gebildet wird, ist das funkenerosive Schneiden oder Drahterodieren. Da der Draht während des Erodierprozesses durch Materialabtragung verschleißt, muss er ständig durch die Schneid- bzw. Bearbeitungszone gezogen werden und kann nur einmal verwendet werden, d.h. der Draht wird kontinuierlich verbraucht.

In der Praxis finden sowohl beschichtete als auch unbeschichtete Drähte bzw. Drahtelektroden Anwendung, die heute zumeist auf Messing- oder Kupferbasis hergestellt sind. Unbeschichtete Drahtelektroden, die auch als Blankdrähte bezeichnet werden, bestehen aus einem homogenen Material, während beschichtete Drahtelektroden einen ummantelten bzw. beschichteten Kern aufweisen. Beschichtete Drahtelektroden sind im Stand der Technik in aller Regel so konstruiert, dass eine Ummantelung bzw. ein Mantel, die bzw. der aus einer Mantelschicht oder mehreren übereinander angeordneten Mantelschichten aufgebaut sein kann, für den eigentlichen Erosionsprozess verantwortlich ist, während der Kern der Drahtelektrode beispielsweise die für den Drahtdurchlauf und die Drahtvorspannung erforderliche Zugfestigkeit und die notwendige elektrische und thermische Leitfähigkeit verleiht.

Blankdrähte bestehen typischerweise aus Messing mit einem Zinkanteil zwischen 35 und 40 Gew.%., während die meisten beschichteten Drähte einen Kern aus Kupfer oder Messing und eine oder mehrere Mantelschichten aus Zink oder einer Kupfer-Zink-Legierung aufweisen. Als am eigentlichen Erodierprozess beteiligte Materialien bieten Zink und Messing aufgrund der Anwesenheit von Zink und der durch diese bewirkten leichten Verdampfbarkeit die Vorteile einer relativ hohen Abtragleistung und Effizienz des Erodierprozesses und der Möglichkeit der Übertragung sehr kleiner Impulsenergien zum Feinschlichten von Werkstückoberflächen.

Bei blanken Messingdrähten sind der Erhöhung des Zinkgehalts Grenzen gesetzt, da aufgrund des mit steigendem Zinkgehalt zunehmenden Anteils spröder Phasen im Gefüge ab einem bestimmten Zinkgehalt die für eine wirtschaftliche Verarbeitbarkeit erforderliche Kaltumformung nicht mehr möglich ist.

Es ist bekannt, dass sich gegenüber diesen Blankdrähten die Schneidleistung daher durch Verwendung von Drähten steigern lässt, die mit einer Beschichtung aus reinem bzw. überwiegend reinem Zink versehen sind. Weiterhin ist bekannt, dass Drähte mit einer Beschichtung aus $\beta$- bzw. $\beta$'-Phase aufweisendem Messing wiederum eine höhere Schneidleistung erzielen als die zuvor genannten verzinkten Drähte, da das in der $\beta$- bzw. $\beta$'-Messing-Legierung gebundene Zink im Vergleich zum reinen Zink langsamer verdampft und damit ausreichend lange abtragsfördernd zur Verfügung steht, während der Draht die Schneid- bzw. Bearbeitungszone passiert. Ferner kann mit Drähten, die eine Beschichtung aus der $\gamma$-Phase und/oder der $\varepsilon$-Phase des Messings aufweisen, der Zinkgehalt des Mantels weiter gesteigert werden, und es können im Vergleich zu den zuvor genannten Drähten mit $\beta$- bzw. $\beta$'-Messing-Beschichtung prinzipiell gleiche oder höhere Schneidleistungen erreicht werden. Dabei hat sich in Zusammenhang mit Beschichtungen aus spröden Phasen wie der $\gamma$-Phase jedoch gezeigt, dass zum einen eine Steigerung der Schichtdicke nicht zwingend zu einer weiteren Leistungssteigerung führt (vgl. EP 1 295 664) und zum anderen der Umformbarkeit dickerer Schichten mit Nachteilen für eine wirtschaftliche Herstellbarkeit Grenzen gesetzt sind (vgl. US 5,945,010). Ferner weisen $\gamma$-Messing-Beschichtungen einen größeren Verschleiß als $\beta$-Messing-Beschichtungen auf, was die Schneidleistung in der Praxis vielfach wieder verringert.

Weitere Entwicklungen zur Steigerung der Schneidleistung beruhen vor allem auf Kombinationen von verschiedenen der genannten Mantelschichten, ggf. mit weiteren Schichten, in einem mehrschichtig aufgebauten Mantel sowie z.B. der Nutzung verschiedener Oberflächeneffekte. Dabei sind auch vereinzelt, teilweise zwangsweise bedingt durch während der entsprechenden Herstellungsverfahren stattfindende Diffusionsprozesse, Ummantelungen vorgeschlagen worden, die eine Messing-Mantelschicht mit einem Phasengemisch zum Beispiel aus $\alpha$- und $\beta$-Phase oder aus $\beta$- und $\gamma$-Phase aufweisen. Beispielsweise ist in der EP 1 038 625 eine Drahtelektrode beschrieben, deren Mantel eine innere Mantelschicht aufweist, die unter anderem eine homogene β-und/oder γ-Struktur haben kann. Durch die Wahl einer solchen Struktur soll ein kubisch raumzentriertes Kristallgitter mit der oben erwähnten stärkeren Einbindung der Zinkatome in das Gitter vorgesehen werden.

Allgemein besteht der Bedarf, die Wirtschaftlichkeit der Drahterodiertechnik durch die weitere Verbesserung von Schneidleistung und Erosionsbeständigkeit zu erhöhen.

Es ist dementsprechend Aufgabe der vorliegenden Erfindung, ein Verfahren zur Herstellung einer Drahtelektrode mit einer verbesserten Schneidleistung und Erosionsbeständigkeit anzugeben.

Zur Lösung dieser Aufgabe dienen die Merkmale von Patentanspruch 1. Vorteilhafte Ausführungsformen des Verfahrens zur Herstellung einer Drahtelektrode sind Gegenstand der jeweiligen zugehörigen Unteransprüche.

Nach der vorliegenden Erfindung ist vorgesehen, dass eine erfindungagemäß hergestellte Drahtelektrode zum funkenerosiven Schneiden einen Kern hat, der ein Metall oder eine Metalllegierung aufweist. Dabei ist es bevorzugt, dass der Kern zu mehr als 50 Gew.% und mehr bevorzugt vollständig oder im wesentlichen vollständig aus einem oder mehreren Metallen und/oder einer oder mehreren Metalllegierungen besteht. Insbesondere kann der Kern demnach insgesamt aus einem Metall oder aus einer Metalllegierung ausgebildet sein. Der Kern kann homogen ausgebildet sein oder, zum Beispiel in Form mehrerer übereinander angeordneter Metall- bzw. Metalllegierungs-Einzelschichten unterschiedlicher Zusammensetzung, in radialer Richtung variierende Eigenschaften aufweisen.

Den Kern umgebend ist, beispielsweise in Form einer Beschichtung, eine Ummantelung bzw. ein Mantel vorgesehen, die bzw. der eine oder mehrere Mantelschichten umfasst. Der Mantel ist dazu vorgesehen, während eines Drahterodiervorgangs zu verschleißen. Im Falle mehrerer Mantelschichten sind diese in radialer Richtung übereinander angeordnet, und jede verläuft bevorzugt den Kern umgebend. Dabei sind eine oder mehrere Mantelschichten vorgesehen, die ein Phasengemisch aus β- und/oder β'-Messing und γ-Messing aufweisen. Demnach kann diese eine Mantelschicht bzw. können diese mehreren Mantelschichten jeweils beispielsweise β-Phase und γ-Phase, β'-Phase und γ-Phase oder aber β-, β'- und γ-Phase aufweisen.

In diesem Zusammenhang sei daran erinnert, dass die β'-Phase unterhalb einer gewissen Temperatur stabil ist und ein geordnetes Gitter mit definierten Gitterplätzen für das Kupfer und das Zink hat und bei Überschreitung dieser Temperatur in die ungeordnete β-Phase übergeht, in der sich die Atome statistisch auf die Gitterplätze eines kubisch raumzentrierten Gitters verteilen. Da die Umwandlung zwischen β-Phase und β'-Phase nach herrschender Meinung nicht zu unterdrücken ist und auch in ihren mechanischen und elektrischen Eigenschaften nur geringe Auswirkungen hat, ist im Rahmen dieser Anmeldung mit einer allgemeinen Bezugnahme auf die β-Phase auch immer die β'-Phase gemeint, wenn nicht ausdrücklich ein Unterschied gemacht wird.

Da β'-Messing, β-Messing und γ-Messing, wie oben angegeben, in vorteilhafter Weise zu einer Erhöhung der Schneidleistung beitragen, ist es besonders bevorzugt, wenn mindestens eine dieser Schichten im Außenbereich oder in der Nähe des Außenbereichs des Mantels vorgesehen ist.

Bevorzugt bildet der Mantel die Außenfläche der Drahtelektrode, und zwischen dem Kern und dem Mantel sind - mit Ausnahme einer weiter unten noch genauer angesprochenen, ggf. vorhandenen Übergangsschicht - keine weiteren Schichten vorgesehen. In bestimmten Anwendungsfällen kann es jedoch auch vorteilhaft sein, auf dem Mantel und/oder zwischen Kern und Mantel eine oder mehrere weitere Schichten vorzusehen.

Die mindestens eine β- und/oder β'-Messing und γ-Messing aufweisende Mantelschicht ist so ausgebildet, dass die β- und/oder β'-Phase und die γ-Phase in einem feinkörnigen Gefüge nebeneinander vorhanden sind, in dem die durchschnittliche Korngröße der β- und/oder β'-Messing-Körner und der γ-Messing-Körner im Schnitt senkrecht zur Längsachse der Drahtelektrode 5 μm oder weniger und bevorzugt 3 μm oder weniger beträgt. In einer bevorzugten Ausführungsform beträgt die durchschnittliche Korngröße der β- und/oder β'-Messing-Körner und der γ-Messing-Körner im Schnitt senkrecht zur Längsachse der Drahtelektrode mindestens 0,1 μm und bevorzugt mindestens 0,2 μm. Die γ-Messing-Körner liegen dabei zum Beispiel als feine Ausscheidung in einer Matrix aus β- und/oder β'-Messing vor. Die genannten Werte für die durchschnittlichen Korngröße beziehen sich somit auf die Gesamtheit bzw. Kombination der β- und/oder β'-Phase und γ-Phase in dem Gefüge, d.h. auf alle zu einer der genannten Phasen gehörenden Körner. Ferner beziehen sich die genannten Werte für die durchschnittliche Korngröße auf die Korngröße senkrecht zur Drahtlängsachse, d.h. in Ebenen senkrecht zur Drahtlängsachse. In Richtung der Drahtlängsachse werden die Körner im allgemeinen aufgrund der während der Herstellung entlang der Längsachse erfolgenden Kaltverformung größere Abmessungen als senkrecht zur Längsachse haben, so dass sich im Längsschliff im allgemeinen größere Werte ergeben werden.

Die durchschnittliche Korngröße wird bevorzugt anhand einer Auswertung von rasterelektronenmikroskopischen Aufnahmen von Querschliffen bestimmt. Die Erzeugung der Querschliffe kann dabei in üblicher Weise Schleifen, Polieren und ggf. Ätzen umfassen. Bevorzugt wird der Draht zunächst mit Hilfe des Ionenböschungsschnittverfahrens quer zu seiner Längsachse geschnitten, d.h. der Draht wird abschnittsweise durch eine Blende abgedeckt und dann mit Ar⁺-Ionen der Energie 6 keV bestrahlt, wodurch über die Blende überstehende Teile des Drahtes durch die Ionen abgetragen werden, und anschließend wird der so präparierte Draht mit Leitsilber leitfähig auf einem Probenhalter befestigt, im Ionenstrahl poliert und anschließend direkt in einem Rasterelektronenmikroskop untersucht. Die verwendeten Aufnahmen sind bevorzugt Rückstreuelektronenbilder bei einer Vergrößerung von 2000 bis 3000, bevorzugt 2000. Die Korngrößenbestimmung kann dann in vorteilhafter Weise in Anlehnung an ASTM E 112 mittels Schnittflächenzählung erfolgen. Dazu können beispielsweise über die Bilder Quadrate mit 10 mm Kantenlänge gelegt und die Anzahl der Körner innerhalb des jeweiligen Quadrats gezählt werden, wobei auf der Außenbegrenzungslinie des Quadrats liegende Körner nur zu 50% zu zählen sind. Die durchschnittliche Korngröße im untersuchten Bereich ergibt sich dann aus der Gleichung

$$D = \sqrt{\frac{A}{V^2 \, n}} \, ,$$

wobei $D$ die durchschnittliche Korngröße (Durchmesser eines äquivalenten Kornes mit quadratischem Querschnitt), $A$ die Fläche des Quadrates, $V$ die Vergrößerung und $n$ die in oben beschriebener Weise ermittelte Anzahl der Körner in dem Quadrat ist. Die so ermittelte Korngröße wird dann zum Beispiel über drei Quadrate gemittelt.

Der Anteil der γ-Phase an dem Phasengemisch beträgt bevorzugt 5 bis 80% und mehr bevorzugt 5 bis 50%. Dabei kann der Anteil in vorteilhaften Ausführungsformen mindestens 10% betragen.

Es hat sich herausgestellt, dass mit einer Drahtelektrode von dieser Ausgestaltung gegenüber vorbekannten Drähten die Schneidleistung und die Erosionsbeständigkeit gleichzeitig erheblich erhöht werden. Durch das in der mindestens einen β- und/oder β'-Messing und γ-Messing aufweisenden Mantelschicht bestehende Gefüge steht γ-Phase zur Förderung der Entladungsvorgänge im Bearbeitungsspalt zur Verfügung, wobei diese aber ausreichend durch das Gefüge gebunden ist, um zu erreichen, dass sie in feinen Dosierungen freigegeben wird. Mit anderen Worten wird verhindert, dass während des Erosionsvorgangs zwischen Drahtelektrode und Werkstück größere Mengen an γ-Phase, zum Beispiel in Form größerer Körner, im kurzer Zeit lokal komplett abgetragen bzw. aufgrund verminderter Bindung zum Substrat komplett abgelöst werden und damit an anderer Stelle, während der weiteren Bewegung des betreffenden Drahtabschnitts durch die von der Werkstückhöhe und Schnittspaltbreite vorgegebenen Erosionszone in nachteiliger Weise nicht mehr zur Verfügung steht. Durch das feinkörnige Gefüge ist außerdem eine erhöhte, vorteilhafte Anzahl von Korngrenzen vorhanden, die als bevorzugte Fußpunkte für die Funkenentladung dienen können, so dass die Zündwilligkeit im Prozess und damit wiederum die Schneidleistung gesteigert wird.

Im Vergleich zu einer Drahtelektrode mit einer, z.B. äußeren, Mantelschicht, die überwiegend größere γ-Phasen-Körnern aufweist, zeigt die erfindungsgemäße hergestellte Drahtelektrode eine höhere Erosionsbeständigkeit. Dadurch ist es möglich, zur Erhöhung der Schneidleistung höhere Generatorleistungen in Form von höheren Impulsfrequenzen oder -strömen anzuwenden. Ferner wird die Sicherheit gegen Drahtriss, d.h. die Prozesssicherheit, insbesondere bei höheren Werkstücken gesteigert, so dass in vorteilhafter Weise die Gefahr von Leerlaufzeiten verringert wird.

Der Mantel kann zum Beispiel durch geeignete Beschichtungsverfahren auf den Kern aufgebracht werden, ggf. in Kombination mit einem Wärmebehandlungsverfahren. Das Aufbringen des Mantels kann beispielsweise physikalisch oder elektrochemisch erfolgen, und es können sich ggf. noch Schritte zur Verringerung des Drahtdurchmessers anschließen. So kann zum Beispiel von einem Vormaterial in Form eines Drahtes aus Cu, $CuZn_{20}$ oder $CuZn_{37}$ mit einem Durchmesser von z.B. 1 mm ausgegangen werden, das, beispielsweise galvanisch oder durch Schmelztauchen, mit Zn beschichtet wird. Nachdem optional mit Hilfe einer Drahtzieheinrichtung der Durchmesser dieses beschichteten Drahtes auf eine Zwischenabmessung verringert wurde, folgen ein- oder mehrstufige Diffusionsglühvorgänge, bei denen Wärme durch Wärmestrahlung, Konvektion oder Konduktion eingebracht werden kann. Das Glühen kann zum Beispiel unter Atmosphäre oder einem Schutzgas erfolgen.

Die Ausbildung des feinkörnigen Phasengemisches aus β- und/oder β'-Messing und γ-Messing wird in vorteilhafter Weise dadurch erreicht, dass der mit Zn beschichtete und optional an eine Zwischenabmessung gezogene Draht zunächst einer Diffusionsglühung unterzogen wird, bei der durch entsprechende bekannte Prozessführung, wie sie z.B. in EP 0 733 431 B1 beschrieben ist, gezielt die Bildung einer Mantelschicht aus überwiegend γ-Messing erfolgt. Dazu kann beispielsweise ausgehend von einer unterhalb einer Temperatur, bei der Diffusion auftritt, aufgebrachten Beschichtung aus Zink, bevorzugt η-Zink, das Diffusionsglühen mit einer Aufheizgeschwindigkeit von mindestens 10 °C/s und einer Glühtemperatur von 500 bis 800 °C durchgeführt werden, wobei eine Glühzeit im Bereich von 10 bis 300 Sekunden so gewählt wird, dass die Mantelschicht aus überwiegend γ-Messing oder bevorzugt im wesentlichen aus γ-Messing entsteht, und dann eine Abkühlung mit mindestens 10 °C/s erfolgt. Anschließend wird eine zweite Diffusionsglühung vorgenommen, bei der das γ-Messing bei Temperaturen oberhalb von 600 °C erst in ein sehr zinkreiches β-Messing mit einem Zinkanteil von mindestens 51 Gew.% umgewandelt wird bzw. im wesentlichen in ein sehr zinkreiches β-Messing mit einem Zinkanteil von mindestens 51 Gew.% umgewandelt wird. Während der Abkühlung scheiden sich dann aus dem übersättigten β-Mischkristall feine Bereiche aus γ-Messing aus. Die Aufheizgeschwindigkeit beträgt bevorzugt mindestens 10 °C/s, die Glühzeit liegt bevorzugt im Bereich von 5 bis 200 s, und die Abkühlgeschwindigkeit beträgt bevorzugt mindestens 10 °C/s. Die obigen Glühzeiten beziehen sich dabei auf den Zeitraum zwischen Beginn und Ende der Wärmezufuhr. Optional können sich jetzt noch eine oder mehrere weitere Zn-Beschichtungsschritte und/oder ein oder mehrere weitere Diffusionsglühvorgänge anschließen, bevor der Draht in seine Endabmessung gezogen wird. Es ist möglich, dass der Draht vor, während oder nach einer der obigen Abkühlvorgänge gezogen wird.

Nachfolgend werden weitere Ausführungsformen des erfindungsgemäßen Verfahrens offenbart.

In einer bevorzugten Ausführungsform ist zumindest eine und sind bevorzugt alle der mindestens einen β- und/oder β'-Messing und γ-Messing aufweisenden Mantelschicht zu mindestens 50 Gew.% aus β- und/oder β'-Messing und γ-Messing ausgebildet. Insbesondere kann zumindest eine oder können alle der mindestens einen β- und/oder β'-Messing und γ-Messing aufweisenden Mantelschicht aus β- und/oder β'-Messing und γ-Messing bestehen oder im wesentlichen bestehen.

In einer vorteilhaften mehrschichtigen Ausgestaltung des Mantels sind eine oder mehrere Mantelschichten vorgesehen, die zu mindestens 50 Gew.% und bevorzugt vollständig oder im wesentlichen vollständig aus β- und/oder β'-Messing, α+β- und/oder α+β'-Messing, α-Messing und/oder Kupfer ausgebildet und zwischen dem Kern und der mindestens einen β- und/oder β'-Messing und γ-Messing aufweisenden Mantelschicht angeordnet sind. Bevorzugt ist, dass alle β- und/oder β'-Messing und γ-Messing aufweisenden Mantelschichten radial außerhalb aller zu mindestens 50 Gew.% aus β- und/oder β'-Messing, α+β- und/oder α+β'-Messing, α-Messing und/oder Kupfer ausgebildeter Mantelschichten angeordnet sind.

In einer dieser mehrschichtigen Ausgestaltungen kann der Mantel zum Beispiel in vorteilhafter Weise eine oder mehrere erste Mantelschichten aufweisen, die zu mindestens 50 Gew.% und bevorzugt vollständig oder im wesentlichen vollständig aus β-und/oder β'-Messing und/oder α+β- und/oder α+β'-Messing ausgebildet und zwischen dem Kern und der mindestens einen β- und/oder β'-Messing und γ-Messing aufweisenden Mantelschicht angeordnet sind. Dabei ist wieder bevorzugt, dass alle β-und/oder β'-Messing und γ-Messing aufweisenden Mantelschichten radial außerhalb aller ersten Mantelschichten angeordnet sind. So kann eine vorteilhafte Ausgestaltung gewählt werden, bei der der Mantel eine weiter außen liegende Mantelschicht, die überwiegend oder vollständig bzw. im wesentlichen vollständig aus β- und/oder β'-Messing und γ-Messing ausgebildet ist, und eine zwischen dieser weiter außen liegenden Mantelschicht und dem Kern angeordnete Mantelschicht, die überwiegend oder vollständig bzw. im wesentlichen vollständig aus β- und/oder β'-Messing und/oder α+β- und/oder α+β'-Messing ausgebildet ist, d.h. eine erste Mantelschicht, aufweist oder aus diesen besteht bzw. im wesentlichen besteht. Es ist bevorzugt, dass eine oder mehrere und bevorzugt alle dieser ersten Mantelschichten ein grobkörnigeres Gefüge als die mindestens eine β-und/oder β'-Messing und γ-Messing aufweisende Mantelschicht haben. Durch das Vorsehen einer ersten Schicht zwischen dem Kern und einer β-und/oder β'-Messing und γ-Messing aufweisenden Mantelschicht kann die Gesamtstärke der Mantelschicht erhöht und so die Verschleiß- bzw. Erosionsbeständigkeit weiter gesteigert werden. Es hat sich gezeigt, dass bei einer bloßen Erhöhung der Schichtdicke der β- und/oder β'-Messing und γ-Messing aufweisenden Mantelschicht die elektrische Leitfähigkeit und die Zugfestigkeit der Drahtelektrode abnehmen, was sich wiederum nachteilig auf die Schneidleistung und die Prozesssicherheit auswirkt.

In Zusammenhang mit dieser Ausführungsform ist es ferner bevorzugt, dass der Mantel eine oder mehrere zweite Mantelschichten aufweist, die jeweils zu mindestens 50 Gew.% und bevorzugt vollständig oder im wesentlichen vollständig aus α-Messing und/oder Kupfer ausgebildet und zwischen dem Kern und der mindestens einen ersten Mantelschicht angeordnet sind. Bevorzugt ist dabei, dass alle ersten Mantelschichten radial außerhalb aller zweiten Mantelschichten und alle β- und/oder β'-Messing und γ-Messing aufweisenden Mantelschichten radial außerhalb aller ersten Mantelschichten angeordnet sind. Eine zweite Mantelschicht kann insbesondere bei Wahl eines Kernwerkstoffs mit mäßigen Erodiereigenschaften, wie z.B. Stahl oder Kupfer, vorteilhaft sein, da sie als zusätzliche Verschleißreserve dient, dabei aber gegenüber einer Mantelschicht, die α+β- und/oder α+β'-Messing bzw. β- und/oder β'-Messing und γ-Messing aufweist, stärker zur Zugfestigkeit beitragen kann. Eine solche Schicht kann ggf. auch herstellungsbedingt vorhanden sein, wenn sich z.B. zwischen einem Kupferkern oder einem kupferplattierten Stahlkern und der ersten Mantelschicht die besagte Zusammensetzung aufgrund von Diffusionsprozessen ergibt.

In einer weiteren mehrschichtigen Ausgestaltung kann der Mantel beispielsweise eine äußere, bevorzugt in Form einer Deckschicht einen Teil der Außenfläche oder die gesamte Außenfläche der Mantelschicht bildende Mantelschicht aufweisen, die zu mindestens 50 Gew.% und bevorzugt vollständig bzw. im wesentlichen vollständig aus Zink, einer Zinklegierung oder Zink-Oxid ausgebildet ist. Eine derartige äußere Mantelschicht ist im Rahmen von Feinschlichtvorgängen mit geringen Entladeenergien vorteilhaft, da das Zink dann schneller zur Verfügung steht. Bei höheren Entladeenergien wird die Schicht dagegen schnell abgetragen und trägt nur unwesentlich zum Erodierprozess bei. Die äußere Mantelschicht weist bevorzugt eine Dicke von 0,1 bis 3 $\mu$m auf.

In einer bevorzugten mehrschichtigen Ausgestaltung ist der Mantel aus einer oder mehreren der oben definierten ersten Mantelschichten, einer oder mehreren der oben definierten β-und/oder β'-Messing und γ-Messing aufweisenden Mantelschichten und der oben definierten äußeren, in Form einer Deckschicht vorgesehenen Mantelschicht aufgebaut. Insbesondere kann der Mantel in vorteilhafter Weise aus einer ersten Mantelschicht, einer β- und/oder β'-Messing und γ-Messing aufweisenden Mantelschicht und der äußeren Mantelschicht aufgebaut sein.

In einer weiteren bevorzugten mehrschichtigen Ausgestaltung ist der Mantel aus einer oder mehreren der oben definierten ersten Mantelschichten, einer oder mehreren der oben definierten zweiten Mantelschichten, einer oder mehreren der oben definierten β- und/oder β'-Messing und γ-Messing aufweisenden Mantelschichten und der oben definierten äußeren, in Form einer Deckschicht vorgesehenen Mantelschicht aufgebaut. Insbesondere kann der Mantel in vorteilhafter Weise aus einer ersten Mantelschicht, einer zweiten Mantelschicht, einer β-und/oder β'-Messing und γ-Messing aufweisenden Mantelschicht und der äußeren Mantelschicht aufgebaut sein.

Es ist bevorzugt, dass der Kern überwiegend und bevorzugt vollständig bzw. im wesentlichen vollständig aus Kupfer oder einer Kupfer-Zink-Legierung mit einem Zinkgehalt von 2 bis 40 Gew.% ausgebildet ist. Derartige Kerne sind in vorteilhafter Weise gut kaltumformbar.

In einer bevorzugten Ausgestaltung liegt entlang der gesamten Länge der Drahtelektrode der durchschnittliche Anteil der Dicke des Mantels an der Gesamtdicke der Drahtelektrode in dem Bereich von 2% bis 30% und bevorzugt in dem Bereich von 5 bis 20%. Ist der Mantel zu dünn, wird keine ausreichende Erosionsbeständigkeit erzielt. Bei zu dicken Mänteln wird die Verarbeitung durch Kaltumformung erschwert, und ferner sinken die Zugfestigkeit und die elektrische Leitfähigkeit der Drahtelektrode aufgrund des steigenden Anteils an spröden Phasen.

Bevorzugte Durchmesser der Drahtelektrode liegen in einem Bereich von 0,1 bis 0,4 mm.

Der den Kern umgebende Mantel kann - je nach Anwendungsfall - sowohl geschlossen ausgebildet sein als auch Risse oder Unterbrechungen aufweisen, d.h. der Mantel kann den Kern vollständig oder im wesentlichen vollständig oder aber nur teilweise bedecken. In ähnlicher Weise kann im Falle mehrschichtiger Ausgestaltungen des Mantels jede Mantelschicht sowohl geschlossen ausgebildet sein als auch Risse oder Unterbrechungen aufweisen, d.h. sie kann die unter ihr liegende Mantelschicht bzw. den Kern vollständig bzw. im wesentlichen vollständig oder aber nur teilweise bedecken. Dies betrifft insbesondere jede der oben genannten Mantelschichten. Auch im Falle mehrschichtiger Mäntel. kann vor diesem Hintergrund der Kern nicht vollständig bedeckt und an einigen Stellen sichtbar sein. So kann es beispielsweise durch die Herstellung der Drahtelektrode mit Kaltziehvorgängen zu Rissen und Abplatzungen der Deckschicht und einer oder mehrerer der darunter liegenden Mantelschichten kommen. Ferner kommt es durch die besagten Kaltziehvorgänge zu Verwerfungen der Mantelschicht bzw. der Mantelschichten, so dass insgesamt die Grenzflächen zwischen benachbarten Mantelschichten bzw. zwischen dem Drahtkern und der darüber liegenden Mantelschicht in der Regel nicht ideal ausgebildet sein werden, sondern unregelmäßig und/oder durch Diffusionsprozesse "unscharf" sein können. Durch die Verwerfungen kann auch das Kernmaterial bis an die Drahtoberfläche vordringen.

In einer bevorzugten Ausgestaltung ist zwischen dem Kern und dem Mantel eine Übergangsschicht angeordnet, die eines oder mehrere Elemente des Kernmaterials sowie eines oder mehrere Elemente des Mantels aufweist und bevorzugt aus diesen besteht oder im wesentlichen besteht. Im allgemeinen wird bereits im Zuge der Herstellung der Drahtelektrode und insbesondere des Mantels eine entsprechende Übergangsschicht entstehen. Zusätzlich oder anstatt einer derartigen herstellungsbedingten Übergangsschicht können auch gezielt eine oder mehrere Übergangsschichten hergestellt werden. Die Übergangsschicht bzw. die Übergangsschichten dient bzw. dienen der Sicherstellung eines ausreichend festen Verbundes zwischen Kern und Mantel.

Es ist insgesamt darauf hinzuweisen, dass zwischen benachbarten Mantelschichten im allgemeinen zwangsläufig herstellungsbedingt, zum Beispiel durch die bereits erwähnten Diffusionsprozesse, Übergangszonen vorhanden sein können, die eine Übergangsschicht bilden können. Wenn im Rahmen dieser Anmeldung davon gesprochen wird, dass der Mantel aus bestimmten Schichten aufgebaut ist, so schließt dies dementsprechend die Anwesenheit derartiger Übergangsschichten nicht aus.

Das erfindungsgemäße Verfahren wird im folgenden anhand von Ausführungsbeispielen unter Bezugnahme auf die Zeichnungen näher erläutert.

Figur 1      zeigt schematisch und nicht maßstabsgetreu einen Querschnitt einer ersten Ausführungsform der erfindungsgemäß hergestellten Drahtelektrode.

Figur 2      zeigt schematisch und nicht maßstabsgetreu einen Querschnitt einer zweiten Ausführungsform der erfindungsgemäß hergestellten Drahtelektrode.

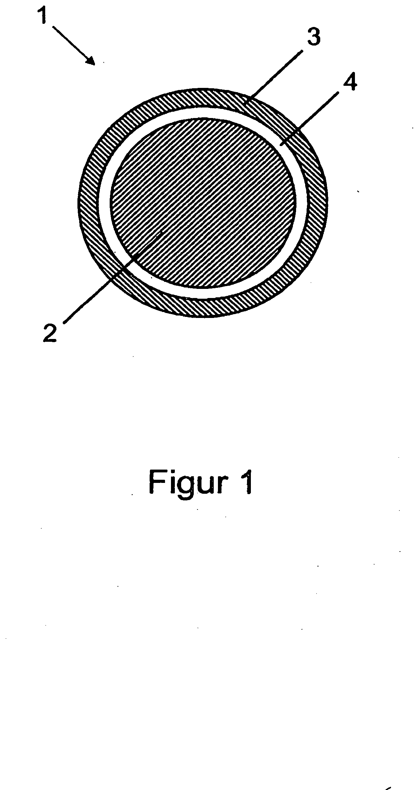

Die in Figur 1 im Querschnitt gezeigte Drahtelektrode 1 weist einen Kerndraht 2 auf, der vollständig von einem die Außenseite der Drahtelektrode 1 bildenden Mantel 3, 4 umgeben ist. In der dargestellten beispielhaften Ausführungsform ist der Kern 2 homogen vollständig oder im wesentlichen vollständig aus Kupfer oder einer Kupfer-Zink-Legierung mit einem Zinkgehalt von bevorzugt 2 bis 40 Gew.% ausgebildet. Der Mantel 3, 4 ist aus zwei übereinander angeordneten Teil- bzw. Mantelschichten 3 und 4 aufgebaut, die jeweils zu mehr als 50 Gew.% und bevorzugt vollständig oder im wesentlichen vollständig aus Messing ausgebildet sind. Es kann allgemein in bestimmten Fällen vorteilhaft sein, die Drahtelektrode 1 so auszubilden, dass die Zusammensetzung des Kerns 2 und/oder des Mantels und/oder einzelner Mantelschichten in radialer Richtung variiert. Dies kann im Falle des Mantels nicht nur durch mehrschichtige Ausgestaltungen realisiert werden, sondern auch durch kontinuierliche Variationen innerhalb einzelner Mantelschichten.

Die weiter außen liegende Mantelschicht 3 besteht überwiegend, d.h. zu mehr als 50 Gew.%, und bevorzugt vollständig oder im wesentlichen vollständig aus einem Gemisch aus zum einen β-und/oder β'-Messing und zum anderen γ-Messing, wobei die β-und/oder β'-Phase und die γ-Phase in einem feinkörnigen Gefüge nebeneinander vorhanden sind, in dem die durchschnittliche Korngröße der β- und/oder β'-Messing-Körner und der γ-Messing-Körner, d.h. die Korngröße gemittelt über alle zu den genannten Phasen gehörenden Körner, senkrecht zur Drahtlängsachse 0,1 bis 5 μm beträgt.

Die weitere Mantelschicht 4 ist zwischen der Mantelschicht 3, die in dem Ausführungsbeispiel der Figur 1 die Außenfläche der Drahtelektrode 1 bildet, und dem Kern 2 angeordnet. Die Mantelschicht 4 kann in vorteilhafter Weise überwiegend, d.h. zu mindestens 50 Gew.%, und bevorzugt vollständig oder im wesentlichen vollständig aus β- und/oder β'-Messing, α+β- und/oder α+β'-Messing, α-Messing und/oder Kupfer bestehen, wobei β-und/oder β'-Messing, α+β- und/oder α+β'-Messing bevorzugt sind. Es kann auch von Vorteil sein, die Mantelschicht 4 durch zwei übereinander angeordnete Mantelschichten zu ersetzen, wobei die an den Kern angrenzende Mantelschicht überwiegend und bevorzugt vollständig oder im wesentlichen vollständig aus α-Messing und/oder Kupfer ausgebildet ist und die darüber angeordnete Mantelschicht überwiegend und bevorzugt vollständig oder im wesentlichen vollständig aus β-und/oder β'-Messing, α+β- bzw. α+β'-Messing ausgebildet ist.

Zwischen dem Mantel 3, 4 und dem Kern 2 kann darüber hinaus eine nicht dargestellte, den Kern 2 ebenfalls vollständig umgebende Übergangsschicht angeordnet sein, die mindestens ein Element aufweist, das in dem Kern 2 vorkommt, und mindestens ein Element, das in der Mantelschicht 4 vorkommt. Bevorzugt weist sie eine Legierung auf, die in ihrer Zusammensetzung zwischen derjenigen des Kerns 2 und derjenigen der Mantelschicht 4 liegt. Dabei kann die Zusammensetzung auch in radialer Richtung variieren, um einen allmählichen Übergang zwischen Kern 2 und Mantelschicht 4 zu bewirken. Eine solche Übergangsschicht dient einer verbesserten Verbindung zwischen dem Kern 2 und der Mantelschicht 4. In Abhängigkeit von dem verwendeten Herstellungsverfahren der Drahtelektrode 1 wird, beispielsweise durch Diffusionsprozesse, im allgemeinen bereits inhärent eine mehr oder weniger ausgedehnte Übergangsschicht entstehen. Eine solche Übergangsschicht wird im Vergleich zum Mantel 3, 4 eine geringe Dicke haben.

Es ist darauf hinzuweisen, dass allgemein insgesamt die Grenzflächen zwischen benachbarten Schichten in der Regel nicht ideal ausgebildet sein werden, sondern unregelmäßig und/oder durch Diffusionsprozesse "unscharf" sein können. Wie bereits oben angegeben wurde, kann der Verlauf der Schichten bzw. der Grenzflächen anders als in den zeichnerischen Darstellungen in Abhängigkeit vom Herstellungsverfahren ggf. auch so unregelmäßig sein, dass einzelne oder mehrere übereinander liegende Schichten stellenweise von darunter liegenden Schichten oder dem Kern "durchbrochen" werden. Insbesondere können der Mantel 3, 4 und/oder einzelne Mantelschichten 3, 4 und/oder eine ggf. vorhandene Übergangsschicht so ausgestaltet sein, dass sie Risse oder Unterbrechungen aufweisen und den Kern bzw. darunter liegende Schichten nicht vollständig bedecken.

In einem speziellen bevorzugten Beispiel dieser Ausführungsform ist der Kern 2 aus $CuZn_{37}$ ausgebildet, die an den Kern angrenzende Mantelschicht 4 ist überwiegend aus β- bzw. β'-Messing mit einem Zinkgehalt von ca. 48 Gew.% ausgebildet, und die die Außenfläche der Drahtelektrode 1 bildende Mantelschicht 3 ist überwiegend aus einem Phasengemisch aus β- bzw. β'-Messing und γ-Messing mit einem durchschnittlichen Zinkgehalt von ca. 55 Gew.% ausgebildet. Die durchschnittliche Schichtdicke der Mantelschicht 4 beträgt ca. 8 μm, die durchschnittliche Schichtdicke der Mantelschicht 3 beträgt ca. 15 μm, und die Dicke der gesamten Drahtelektrode 1 beträgt 0,25 mm. Die Drahtelektrode 1 weist eine Zugfestigkeit von ca. 800 N/mm² und eine elektrische Leitfähigkeit von ca. 12 m/Ωmm² auf. Eine etwaige Übergangsschicht zwischen dem Kern und dem Mantel 3, 4 könnte beispielsweise eine Dicke von ca. 1 μm haben.

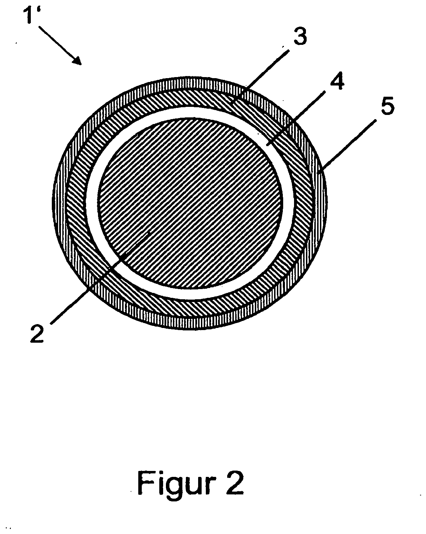

In Figur 2 ist eine weitere bevorzugte Ausführungsform einer Drahtelektrode 1' im Querschnitt gezeigt. Diese Ausführungsform unterscheidet sich prinzipiell nur dadurch von der Ausführungsform gemäß Figur 1, dass auf der Mantelschicht 3 als äußerste Mantelschicht noch eine Deckschicht 5 vorgesehen ist, die überwiegend und bevorzugt vollständig bzw. im wesentlichen vollständig aus Zink, einer Zinklegierung und/oder Zink-Oxid ausgebildet ist. Sie sollte in vorteilhafter Weise einen höheren Zinkgehalt als die Mantelschicht 3 aufweisen und kann dann Feinschlichtvorgängen mit geringen Entladeenergien günstig beeinflussen. Dabei kann die Deckschicht 5 eine deutlich geringere Dicke als die Mantelschicht 3 und stärkere Unterbrechungen aufweisen. Ggf. kann daher die Außenfläche der Drahtelektrode 1' im wesentlichen durch die Mantelschicht 3 und die Deckschicht 5 gebildet werden.

In einem speziellen bevorzugten Beispiel dieser Ausführungsform gemäß Figur 2 ist der Kern 2 aus $CuZn_{20}$ ausgebildet, die an den Kern angrenzende Mantelschicht 4 ist überwiegend aus β- bzw. β'-Messing mit einem Zinkgehalt von ca. 45 Gew.% ausgebildet, die Mantelschicht 3 ist überwiegend aus einem Phasengemisch aus β- bzw. β'-Messing und γ-Messing mit einem durchschnittlichen Zinkgehalt von ca. 53 Gew.% ausgebildet, und die Deckschicht 5 besteht überwiegend aus Zink-Oxid. Die durchschnittliche Schichtdicke der Mantelschichten 3 und 4 beträgt jeweils ca. 12 μm, die durchschnittliche Schichtdicke der Deckschicht 5 beträgt ca. 1 μm, und die Dicke der gesamten Drahtelektrode 1' beträgt 0,25 mm. Die Drahtelektrode 1' weist eine Zugfestigkeit von ca. 750 N/mm² und eine elektrische Leitfähigkeit von ca. 17 m/Ωmm² auf. Eine etwaige Übergangsschicht zwischen dem Kern und dem Mantel 3, 4 könnte beispielsweise eine Dicke von ca. 1 μm haben.

**Patentansprüche**

1. Verfahren zur Herstellung einer Drahtelektrode (1, 1') zum funkenerosiven Schneiden mit

   - einem Kern (2), der ein Metall oder eine Metalllegierung aufweist, und
   - einem den Kern (2) umgebenden Mantel (3, 4; 3, 4, 5), der eine oder mehrere Mantelschichten (3, 4, 5) umfasst, von denen mindestens eine (3) ein Phasengemisch aus β- und/oder β'-Messing und γ-Messing aufweist,

   wobei in der mindestens einen β- und/oder β'-Messing und γ-Messing aufweisenden Mantelschicht (3) der Drahtelektrode die β- und/oder β'-Phase und die γ-Phase in einem feinkörnigen Gefüge nebeneinander vorhanden sind, in dem die durchschnittliche Korngröße der β- und/oder β'-Messing-Körner und der γ-Messing-Körner im Schnitt senkrecht zur Längsachse der Drahtelektrode (1, 1') 5 μm oder weniger beträgt,

   bei dem ein Kupfer oder Messing aufweisender Kern (2) mit Zink beschichtet wird und durch Diffusionsglühen ein Draht mit einer Mantelschicht gebildet wird, die überwiegend aus γ-Messing besteht,
   **dadurch gekennzeichnet,**
   **dass** anschließend ein weiterer Diffusionsglühschritt durchgeführt wird, bei dem das γ-Messing bei Temperaturen oberhalb von 600 °C im wesentlichen in ein β-Messing mit einem Zinkgehalt von mindestens 51 Gew.% umgewandelt wird, und schließlich der Draht (1, 1') abgekühlt wird, wobei sich aus dem übersättigten β-Mischkristall feine Bereiche aus γ-Messing ausscheiden.

2. Verfahren nach Anspruch 1, bei dem die Aufheizgeschwindigkeit mindestens 10 °C/s beträgt, die Glühzeit 5 bis 200 s beträgt und die Abkühlgeschwindigkeit mindestens 10 °C/s beträgt.

3. Verfahren nach Anspruch 1 oder 2, wobei die durchschnittliche Korngröße der β- und/oder β'-Messing-Körner und der γ-Messing-Körner der Drahtelektrode im Schnitt senkrecht zur Längsachse der Drahtelektrode (1, 1') 3 μm oder weniger beträgt.

4. Verfahren nach einem der vorhergehenden Ansprüche, wobei die mindestens einen β- und/oder β'-Messing und γ-Messing aufweisende Mantelschicht (3) der Drahtelektrode zu mindestens 50 Gew.% aus β- und/oder β'-Messing und γ-Messing ausgebildet ist.

5. Verfahren nach einem der vorhergehenden Ansprüche, wobei der Mantel (3, 4; 3, 4, 5) der Drahtelektrode mindestens eine Mantelschicht (4) aufweist, die zu mindestens 50 Gew.% aus β- und/oder β'-Messing, α+β- bzw. α+β'-Messing, α-Messing und/oder Kupfer ausgebildet und zwischen dem Kern (2) und der mindestens einen β- und/oder β'-Messing und γ-Messing aufweisenden Mantelschicht (3) angeordnet ist.

6. Verfahren nach Anspruch 5, wobei der Mantel (3, 4; 3, 4, 5) der Drahtelektrode mindestens eine erste Mantelschicht (4) aufweist, die zu mindestens 50 Gew.% aus β- und/oder β'-Messing und/oder α+β- bzw. α+β'-Messing ausgebildet und zwischen dem Kern (2) und der mindestens einen β- und/oder β'-Messing und γ-Messing aufweisenden Mantelschicht (3) angeordnet ist.

7. Verfahren nach Anspruch 6, wobei das Gefüge der mindestens einen ersten Mantelschicht (4) der Drahtelektrode grobkörniger als das Gefüge der mindestens einen β- und/oder β'-Messing und γ-Messing aufweisenden Mantelschicht (3) ist.

8. Verfahren nach Anspruch 6 oder Anspruch 7, wobei der Mantel (3, 4; 3, 4, 5) der Drahtelektrode mindestens eine zweite Mantelschicht (4) aufweist, die zu mindestens 50 Gew.% aus α-Messing und/oder Kupfer ausgebildet und zwischen dem Kern (2) und der mindestens einen ersten Mantelschicht (4) angeordnet ist.

9. Verfahren nach einem der vorhergehenden Ansprüche, wobei der Mantel (3, 4, 5) der Drahtelektrode eine äußere Mantelschicht (5) aufweist, die zu mindestens 50 Gew.% aus Zink, einer Zinklegierung oder Zink-Oxid ausgebildet ist.

10. Verfahren nach Anspruch 6 oder Anspruch 7 und Anspruch 9, wobei der Mantel (3, 4, 5) der Drahtelektrode aus der mindestens einen ersten Mantelschicht (4), der mindestens einen β- und/oder β'-Messing und γ-Messing aufweisenden Mantelschicht (3) und der äußeren Mantelschicht (5) aufgebaut ist.

11. Verfahren nach Anspruch 6 oder Anspruch 7 und den Ansprüchen 8 und 9, wobei der Mantel (3, 4, 5) der Drahtelektrode aus der mindestens einen ersten Mantelschicht (4), der mindestens einen zweiten Mantelschicht (4), der mindestens einen β- und/oder β'-Messing und γ-Messing aufweisenden Mantelschicht (3) und der äußeren Mantelschicht (5) aufgebaut ist.

12. Verfahren nach einem der Ansprüche 9 bis 11, wobei die äußere Mantelschicht (5) der Drahtelektrode eine Dicke von 0,1 bis 3 μm aufweist.

13. Verfahren nach einem der vorhergehenden Ansprüche, wobei der Kern (2) der Drahtelektrode aus Kupfer oder einer Kupfer-Zink-Legierung mit einem Zinkgehalt von 2 bis 40 Gew.% ausgebildet ist.

14. Verfahren nach einem der vorhergehenden Ansprüche, wobei entlang der gesamten Länge der Drahtelektrode (1, 1') der durchschnittliche Anteil der Dicke des Mantels (3, 4; 3, 4, 5) an der Gesamtdicke der Drahtelektrode (1, 1') in dem Bereich von 2% bis 30% liegt.

**Claims**

1. A method for producing a wire electrode (1, 1') for cutting by electrical discharge machining, having

   - a core (2) which comprises a metal or a metal alloy, and
   - a covering (3, 4; 3, 4, 5) which surrounds the core (2) and comprises one or more covering layers (3, 4, 5), of which at least one (3) contains a phase mixture of β and/or β' brass and γ brass,

   wherein in the at least one covering layer (3) of the wire electrode comprising β and/or β' brass and γ brass, the β and/or β' phase and the γ phase are present next to one another in a fine-grained microstructure, in which the mean grain size of the β and/or β' brass grains and the γ brass grains is 5 μm or less in section perpendicular to the longitudinal axis of the wire electrode (1, 1'), in which method a core (2) comprising copper or brass is coated with zinc and a wire having a covering layer consisting predominantly of γ brass is formed by diffusion annealing, **characterized in that** a further diffusion annealing step is then carried out, in which the γ brass is substantially converted into a β brass having a zinc content of at least 51% by weight at temperatures above 600 °C, and finally the wire (1, 1') is cooled, in which case fine regions of γ brass are precipitated from the supersaturated β solid solution.

2. The method as claimed in claim 1, wherein the heating rate is at least 10 °C/s, the annealing time is 5 to 200 s and the cooling rate is at least 10 °C/s.

3. The method as claimed in claim 1 or claim 2, wherein the mean grain size of the β and/or β' brass grains and the γ brass grains of the wire electrode is 3 μm or less in section perpendicular to the longitudinal axis of the wire electrode (1, 1').

4. The method as claimed in any of the preceding claims, wherein the at least one covering layer (3) comprising β and/or β' brass and γ brass of the wire electrode is formed from β and/or β' brass and γ brass to an extent of at least 50% by weight.

5. The method as claimed in any of the preceding claims, wherein the covering (3, 4; 3, 4, 5) of the wire electrode comprises at least one covering layer (4), which is formed from β and/or β' brass, α+β or α+β' brass, α brass and/or copper to an extent of at least 50% by weight and is arranged between the core (2) and the at least one covering layer (3) comprising β and/or β' brass and γ brass.

6. The method as claimed in claim 5, wherein the covering (3, 4; 3, 4, 5) of the wire electrode comprises at least one first covering layer (4), which is formed from β and/or β' brass and/or α+β or α+β' brass to an extent of at least 50% by weight and is arranged between the core (2) and the at least one covering layer (3) comprising β and/or β' brass and γ brass.

7. The method as claimed in claim 6, wherein the microstructure of the at least one first covering layer (4) of the wire electrode is more coarse-grained than the microstructure of the at least one covering layer (3) comprising β and/or β' brass and γ brass.

8. The method as claimed in claim 6 or claim 7, wherein the covering (3, 4; 3, 4, 5) of the wire electrode comprises at least one second covering layer (4), which is formed from α brass and/or copper to an extent of at least 50% by weight and is arranged between the core (2) and the at least one first covering layer (4).

9. The method as claimed in any of the preceding claims, wherein the covering (3, 4, 5) of the wire electrode comprises an outer covering layer (5), which is formed from zinc, a zinc alloy or zinc oxide to an extent of at least 50% by weight.

10. The method as claimed in claim 6 or claim 7 and claim 9, wherein the covering (3, 4, 5) of the wire electrode is composed of the at least one first covering layer (4), the at least one covering layer (3) comprising β and/or β' brass and γ brass and the outer covering layer (5).

**11.** The method as claimed in claim 6 or claim 7 and claims 8 and 9, wherein the covering (3, 4, 5) of the wire electrode is composed of the at least one first covering layer (4), the at least one second covering layer (4), the at least one covering layer (3) comprising β and/or β' brass and γ brass and the outer covering layer (5).

**12.** The method as claimed in any of claims 9 to 11, wherein the outer covering layer (5) of the wire electrode has a thickness of 0.1 to 3 μm.

**13.** The method as claimed in any of the preceding claims, wherein the core (2) of the wire electrode is formed from copper or a copper-zinc alloy having a zinc content of 2 to 40% by weight.

**14.** The method as claimed in any of the preceding claims, wherein the mean contribution of the thickness of the covering (3, 4; 3, 4, 5) to the total thickness of the wire electrode (1, 1') is in the range of 2% to 30% along the entire length of the wire electrode (1, 1').

**Revendications**

**1.** Procédé de fabrication d'un fil-électrode (1, 1') pour le découpage par étincelage, comprenant :

- un noyau (2), qui comporte un métal ou un alliage métallique, et
- une enveloppe (3, 4 ; 3, 4, 5) entourant le noyau (2), qui comprend une ou plusieurs couches d'enveloppe (3, 4, 5), dont au moins une (3) présente un mélange de phases constitué de laiton β et/ou de laiton β' et de laiton y,

dans lequel, dans la couche d'enveloppe (3) du fil-électrode comportant au moins du laiton β et/ou du laiton β' et du laiton y, la phase β et/ou la phase β' et la phase γ sont présentes l'une à côté de l'autre dans une structure à grains fins, dans laquelle la taille granulaire moyenne des grains de laiton β et/ou de laiton β' et des grains de laiton γ est de 5 μm ou moins, en coupe perpendiculaire à l'axe longitudinal du fil-électrode (1, 1'),
dans lequel un noyau (2) comportant du cuivre ou du laiton est revêtu de zinc et, par recuit de diffusion, un fil métallique est formé avec une couche d'enveloppe, qui est majoritairement constituée de laiton γ, **caractérisé en ce qu'**une autre étape de recuit de diffusion est ensuite réalisée, dans laquelle le laiton γ est, à des températures supérieures à 600 °C, sensiblement transformé en laiton β avec une teneur en zinc d'au moins 51 % en poids et, enfin, le fil (1, 1') est refroidi, moyennant quoi de fines zones de laiton γ se dégagent du cristal mixte β sursaturé.

**2.** Procédé selon la revendication 1, dans lequel la vitesse de chauffage est d'au moins 10 °C/s, le temps de recuit est de 5 à 200 s et la vitesse de refroidissement est d'au moins 10 °C/s.

**3.** Procédé selon la revendication 1 ou la revendication 2, dans lequel la taille granulaire moyenne des grains de laiton β et/ou de laiton β' et des grains de laiton γ du fil-électrode est de 3 μm ou moins, en coupe perpendiculaire à l'axe longitudinal du fil-électrode (1, 1').

**4.** Procédé selon l'une quelconque des revendications précédentes, dans lequel la couche d'enveloppe (3) comportant au moins un laiton β et/ou laiton β' et du laiton γ du fil-électrode est formée à hauteur d'au moins 50 % en poids de laiton β et/ou de laiton β' et de laiton γ.

**5.** Procédé selon l'une quelconque des revendications précédentes, dans lequel l'enveloppe (3, 4 ; 3, 4, 5) du fil-électrode présente au moins une couche d'enveloppe (4) qui est formée à hauteur d'au moins 50 % en poids de laiton β et/ou de laiton β', de laiton α+β ou de laiton α+β', de laiton α et/ou de cuivre et est agencée entre le noyau (2) et la couche d'enveloppe (3) comportant au moins un laiton β et/ou laiton β' et du laiton γ.

**6.** Procédé selon la revendication 5, dans lequel l'enveloppe (3, 4 ; 3, 4, 5) du fil-électrode présente au moins une première couche d'enveloppe (4) qui est formée à hauteur d'au moins 50 % en poids de laiton β et/ou de laiton β' et/ou de laiton α+β ou de laiton α+β' et est agencée entre le noyau (2) et la couche d'enveloppe (3) comportant au moins un laiton β et/ou laiton β' et du laiton γ.

**7.** Procédé selon la revendication 6, dans lequel la structure de la au moins une première couche d'enveloppe (4) du fil-électrode a des grains plus grossiers que la structure de la couche d'enveloppe (3) comportant au moins un laiton β et/ou laiton β' et du laiton γ.

**8.** Procédé selon la revendication 6 ou la revendication 7, dans lequel l'enveloppe (3, 4 ; 3, 4, 5) du fil-électrode présente au moins une deuxième couche d'enveloppe (4) qui est formée à hauteur d'au moins 50 % en poids de laiton α et/ou de cuivre et qui est agencée entre le noyau (2) et la au moins une première couche d'enveloppe (4).

9. Procédé selon l'une quelconque des revendications précédentes, dans lequel l'enveloppe (3, 4, 5) du fil-électrode présente une couche d'enveloppe externe (5) qui est formée à hauteur d'au moins 50 % en poids de zinc, d'un alliage de zinc ou d'oxyde de zinc.

10. Procédé selon la revendication 6 ou la revendication 7 et la revendication 9, dans lequel l'enveloppe (3, 4, 5) du fil-électrode est constituée de la au moins une première couche d'enveloppe (4), de la couche d'enveloppe (3) comportant au moins un laiton β et/ou laiton β' et du laiton γ et de la couche d'enveloppe externe (5).

11. Procédé selon la revendication 6 ou la revendication 7 et les revendications 8 et 9, dans lequel l'enveloppe (3, 4, 5) du fil-électrode est constituée de la au moins une première couche d'enveloppe (4), de la au moins une deuxième couche d'enveloppe (4), de la couche d'enveloppe (3) comportant au moins un laiton β et/ou laiton β' et du laiton γ, et de la couche d'enveloppe externe (5).

12. Procédé selon l'une quelconque des revendications 9 à 11, dans lequel la couche d'enveloppe externe (5) du fil-électrode présente une épaisseur de 0,1 à 3 μm.

13. Procédé selon l'une quelconque des revendications précédentes, dans lequel le noyau (2) du fil-électrode est formé de cuivre ou d'un alliage cuivre-zinc avec une teneur en zinc de 2 à 40 % en poids.

14. Procédé selon l'une quelconque des revendications précédentes, dans lequel, sur toute la longueur du fil-électrode (1, 1'), la proportion moyenne de l'épaisseur de l'enveloppe (3, 4 ; 3, 4, 5) ramenée à l'épaisseur totale du fil-électrode (1, 1') se situe dans la plage de 2 % à 30 %.

1

3

4

2

Figur 1

1'

3

4

5

2

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5808262 A
- EP 0733431 A
- EP 1295664 A
- US 5945010 A
- EP 1038625 A
- EP 0733431 B1